# EUROPÄISCHE PATENTSCHRIFT

(11) **EP 3 035 303 B1**
(45) Veröffentlichungstag und Bekanntmachung des Hinweises auf die Patenterteilung: **25.03.2020**
(21) Anmeldenummer: 14198680.2
(22) Anmeldetag: 17.12.2014
(51) Int. Cl.: G07F 7/06

(54) **Rücknahmeautomat**
Reverse vending machine
Automate de reprise

(43) Veröffentlichungstag der Anmeldung: 22.06.2016
(73) Patentinhaber: Wincor Nixdorf International GmbH, 33106 Paderborn (DE)
(72) Erfinder: Baitz, Günter, 13629 Berlin (DE); Malke, Wolfgang, 13465 Berlin (DE); Krüger, Uwe, 13465 Berlin (DE); Schäfer, Oliver, 10369 Berlin (DE)

(56) Entgegenhaltungen:
- EP-A1- 2 363 837
- EP-A1- 2 538 393
- EP-A2- 2 378 494
- WO-A1-2009/021515
- US-A1- 2007 292 117
- US-A1- 2012 209 741
- US-A1- 2012 255 967

## Beschreibung

Die Erfindung betrifft einen Rücknahmeautomaten. Der Rücknahmeautomat umfasst einen Einführbereich zum Einführen eines Objekts in das Innere des Rücknahmeautomaten, eine Transporteinheit zum Transportieren des Objekts in einem Transportbereich entlang einer Transportachse und eine Anordnung von Kameras zum Erfassen von Bildern des Objekts aus mehreren Erfassungsrichtungen.

Aus dem Stand der Technik ist ein Rücknahmeautomat mit einem Ringscanner bekannt. Bei dem bekannten Rücknahmeautomaten ist der Scanner als geschlossener Ring um den Flascheneinführtrichter herum angeordnet. Die Blickrichtung der Scanner-Kameras erfolgt aus der spiegelnden senkrechten Glasfläche heraus schräg nach hinten. Im geschlossenen Zustand befindet sich zwischen dem Ringscanner und dem dahinter angeordneten Transportband ein ca. 30mm großer Spalt. Das Gebinde kann von unten nur gescannt werden, da die Kameras durch diesen Spalt zwischen Scanner und Transportband hindurch von unten schräg nach hinten schauen. Durch diese Anordnung bestimmt die Tiefe des Scanners in Transportrichtung auch die Eingriffstiefe des Kunden, bis dieser das Gebinde auf dem Transportband ablegen kann. Dabei können Restmengen an Flüssigkeiten aus den Gebinden durch den Spalt nach unten laufen und die Kameraoptik verschmutzen. Der bekannte Rücknahmeautomat hat somit den Nachteil, dass die unterhalb des Transportbandes vorgesehenen Kameras durch auslaufende Flüssigkeiten aus darüber befindlichen Gebinden verschmutzt werden können, wodurch die Erkennungsleistung des Ringscanners verringert wird.

Aus dem Dokument WO 2009/021515 A1 ist eine Vorrichtung zum Zählen und/oder Sortieren von Objekten, insbesondere wiederverwendbaren Getränkebehältern, wie Flaschen oder Dosen, bekannt. Die Vorrichtung hat eine Aufnahmeeinheit zum Identifizieren der Objekte. Die Aufnahmeeinheit umfasst eine im Wesentlichen senkrecht zur Transportrichtung der Objekte verlaufende Scan-Ebene. In der Scan-Ebene ist zumindest eine photoelektrische Sensoreinheit vorgesehen, die zum Erfassen des Vorhandenseins eines Objekts in der Scan-Ebene dient.

Aus dem Dokument EP 2 538 393 A1 ist ein Rücknahmeautomat bekannt. Der Rücknahmeautomat umfasst eine Kammer, die angepasst ist, ein an den Rücknahmeautomaten zurückgegebenes Objekt zu empfangen, und eine Mehrzahl von Kameras, die um den Umfang der Kammer herum angeordnet sind, um das Objekt zu erfassen. Der Rücknahmeautomat umfasst ferner eine transparente Platte und Mittel, die angepasst sind, Licht in die Platte einzukoppeln, so dass das Licht interne Totalreflexion in der Platte erfährt.

Aus dem Dokument EP 2 363 837 A1 ist eine Vorrichtung zur optischen Erkennung von Merkmalen auf Verpackungen, insbesondere Bar- oder Strichcodes oder dergleichen, bekannt.

Ausgehend von dem bekannten Stand der Technik ist es Aufgabe der Erfindung, einen Rücknahmeautomaten anzugeben, der eine einfache und zuverlässige Erfassung von Bildern eines zu scannenden Objekts ermöglicht.

Diese Aufgabe wird durch einen Rücknahmeautomaten mit den Merkmalen des Anspruchs 1 gelöst. Vorteilhafte Weiterbildungen sind in den abhängigen Ansprüchen angegeben.

Durch einen Rücknahmeautomaten mit den Merkmalen des Anspruchs 1 wird eine einfache und zuverlässige Erfassung von Bildern eines zu scannenden Objekts ermöglicht, da insbesondere ein Einführbereich zum Einführen eines Objekts in das Innere des Rücknahmeautomaten, eine Transporteinheit zum Transportieren des Objekts in einem Transportbereich entlang einer Transportachse und eine Anordnung von Kameras zum Erfassen von Bildern des Objekts aus mehreren Erfassungsrichtungen vorgesehen sind. Die Bilderfassungsrichtung jeder Kamera ist zum Transportbereich hin gerichtet. Ferner sind die Kameras außerhalb eines kamerafreien Bereichs angeordnet. Der kamerafreie Bereich umfasst den Transportbereich und den Bereich senkrecht unterhalb des Transportbereichs, wobei sich senkrecht unterhalb auf die Position bei einem bestimmungsgemäßen Gebrauch des Rücknahmeautomaten im Betrieb bezieht. Das bedeutet, dass die Kameras außerhalb des Transportbereichs und nicht senkrecht unterhalb des Transportbereichs angeordnet sind. Somit kann eine Verschmutzung von unterhalb des Transportbereichs vorgesehenen Kameras durch Flüssigkeiten, die aus einem in den Transportbereich eingeführten Objekt auslaufen, verhindert werden. Dies ermöglicht die einfache und zuverlässige Erfassung von Bildern des zu scannenden Objekts.

Der Einführbereich wird von einem Einführtrichter gebildet. Der Transportbereich liegt in der Erfassungsebene in Transportrichtung unmittelbar hinter dem Einführtrichter bzw. hinter dem Einführbereich. Vorzugsweise entspricht die Breite des Transportbereichs dem Durchmesser des inneren Umfangs des Einführtrichters oder der seitlichen Ausdehnung des Einführbereichs. Ferner entspricht die Höhe des Transportbereichs zumindest der Höhe des Objekts bzw. dem Durchmesser des inneren Umfangs des Einführtrichters oder der vertikalen Ausdehnung des Einführbereichs.

Die Anordnung von Kameras umfasst ein Paar von Kameras, das außerhalb des kamerafreien Bereichs seitlich neben der Transporteinheit angeordnet ist. Dabei haben die Kameras des Paares einen Abstand, der größer als die seitliche Ausdehnung des Transportbereichs ist. Somit kann das Objekt aus zwei Erfassungsrichtungen schräg von unten erfasst werden, ohne dass sich die Kameras des Paares in dem kamerafreien Bereich senkrecht unterhalb des Transportbereichs befinden. Mit anderen Worten, unterhalb der Breite des Transportbereichs ist keine Kamera der Kameraanordnung vorgesehen.

Vorzugsweise ist zumindest ein Teil der Transporteinheit bis in den Bereich senkrecht unterhalb des Transportbereichs bewegbar. Daraus resultiert eine verbesserte Transportbandplatzierung. Ferner wird eine nahezu senkrechte Blickrichtung, d. h. eine Bilderfassungsrichtung senkrecht zur Transportrichtung, auf das frei bewegbare Objekt ermöglicht.

Vorzugsweise umfasst die Anordnung von Kameras eine U-Form. Dabei sind der Transportbereich und der Bereich senkrecht unterhalb des Transportbereichs von der U-förmigen Anordnung von Kameras umgeben. Insbesondere kann die Kameraanordnung eine hufeisenförmige Anordnung sein. Somit kann der kamerafreie Bereich in dem nach innen hin offenen Bereich der hufeisenförmigen Anordnung vorgesehen sein.

Vorzugsweise erstrecken sich der Transportbereich und der Bereich senkrecht unterhalb des Transportbereichs entlang der Längsachse der Anordnung von Kameras senkrecht zur Transportachse. Somit kann sich der kamerafreie Bereich im Wesentlichen über die gesamte Länge der Schenkel der hufeisenförmigen Anordnung erstrecken.

Vorzugsweise ist das untere Ende der Anordnung von Kameras auf derselben Höhe wie das untere Ende der Transporteinheit angeordnet. Somit erstreckt sich auch der kamerafreie Bereich bis an das untere Ende der Transporteinheit.

Vorzugsweise umfasst die Transporteinheit ein Transportband, das unmittelbar unterhalb des Transportbereichs positionierbar ist. Somit kann das Objekt von dem Transportband zuverlässig aufgenommen und in das Innere des Rücknahmeautomaten transportiert werden.

Die Anordnung von Kameras umfasst zumindest ein erstes Paar von Kameras und ein zweites Paar von Kameras. Dabei sind das erste Paar von Kameras in einem an den Transportbereich angrenzenden ersten Bereich oberhalb des Transportbereichs und das zweite Paar von Kameras in einem an den Bereich senkrecht unterhalb des Transportbereichs angrenzenden zweiten Bereich seitlich neben der Transporteinheit angeordnet. Somit kann das Objekt aus mindestens vier Erfassungsrichtungen radial von oben bzw. radial von unten erfasst werden.

Die Kameras sind derart angeordnet, dass das Objekt in einer Erfassungsebene senkrecht zur Transportachse vollständig erfasst wird. Somit wird eine 360°-Detektion des Objekts mit Hilfe der Kameraanordnung ermöglicht.

Vorzugsweise sind die Kameras derart angeordnet, dass das Objekt aus mindestens vier Erfassungsrichtungen erfasst wird. Dabei bilden die Erfassungsrichtungen jeweils zueinander einen Winkel größer als 90°.

Vorzugsweise sind die Kameras derart angeordnet, dass das Objekt aus mehreren Erfassungsrichtungen die jeweils einen Winkel von 90° relativ zur Transportachse haben, erfasst wird. Somit kann die im Wesentlichen senkrechte Blickrichtung, d. h. die Bilderfassungsrichtung senkrecht zur Transportrichtung, des Objekts realisiert werden. Dadurch können perspektivische Verzerrungen während der Erfassung von Bildern des Objekts verhindert oder zumindest verringert werden. Insbesondere kann auf rechenaufwändige Vorverarbeitungsschritte verzichtet werden, was die Verwendung einfacherer Algorithmen für die Erkennung ermöglicht.

Der Rücknahmeautomat ist durch einen oberhalb der Transporteinheit angeordneten Einführtrichter mit dem Einführbereich gekennzeichnet. Dabei erstreckt sich der Einführtrichter in Transportrichtung von einer ersten Seite zu einer zweiten Seite. Ferner sind die Transporteinheit und der Einführtrichter beabstandet voneinander angeordnet, so dass sich ein freier Spalt zwischen der zweiten Seite des Einführtrichters und einer dieser Seite zugewandten Seite der Transporteinheit ergibt. Durch den freien Spalt zwischen dem Einführtrichter und der Transporteinheit wird die Ansicht von unten, d. h. die Erfassung mittels zweier seitlich neben der Transporteinheit angeordneten Kameras ermöglicht.

Vorzugsweise ist die Ausdehnung des freien Spalts parallel zur Transportachse variabel einstellbar. Somit kann der Sichtspalt für die zwei seitlich neben der Transporteinheit angeordneten Kameras vergrößert bzw. verkleinert werden.

Die Ausdehnung des freien Spalts parallel zur Transportachse liegt zwischen 20mm und 30mm. Somit kann die Transporteinheit sehr nahe an die Rückseite des Einführtrichters heran bewegt werden.

Vorzugsweise ist der Abstand zwischen der ersten Seite des Einführtrichters und der Transporteinheit kleiner als 100mm. Somit kann eine vergleichsweise geringe Eingabetiefe für das Objekt von der Vorderseite des Einführtrichters bis zum Beginn der Transporteinheit realisiert werden.

Vorzugsweise ist der Rücknahmeautomat durch eine in den Bereich senkrecht unterhalb des Transportbereichs angeordnete Vorrichtung zum Auffangen von von dem Objekt herkommenden Fremdstoffen gekennzeichnet. Somit kann eine geeignete Auffangvorrichtung für Flüssigkeiten und sonstige Restbestände und Fremdpartikel senkrecht unterhalb des Transportbereichs vorgesehen sein.

Weitere Merkmale und Vorteile der Erfindung ergeben sich aus der nachfolgenden Beschreibung, die die Erfindung anhand von Ausführungsbeispielen im Zusammenhang mit den beigefügten Figuren näher erläutert.

Es zeigen:
- Figur 1: eine Seitenansicht eines Rücknahmeautomaten mit einem Einführbereich, mit einer Transporteinheit und mit einer Anordnung von Kameras; und
- Figur 2: eine Vorderansicht des Rücknahmeautomaten nach Figur 1 mit einer hufeisenförmigen Kameraanordnung.

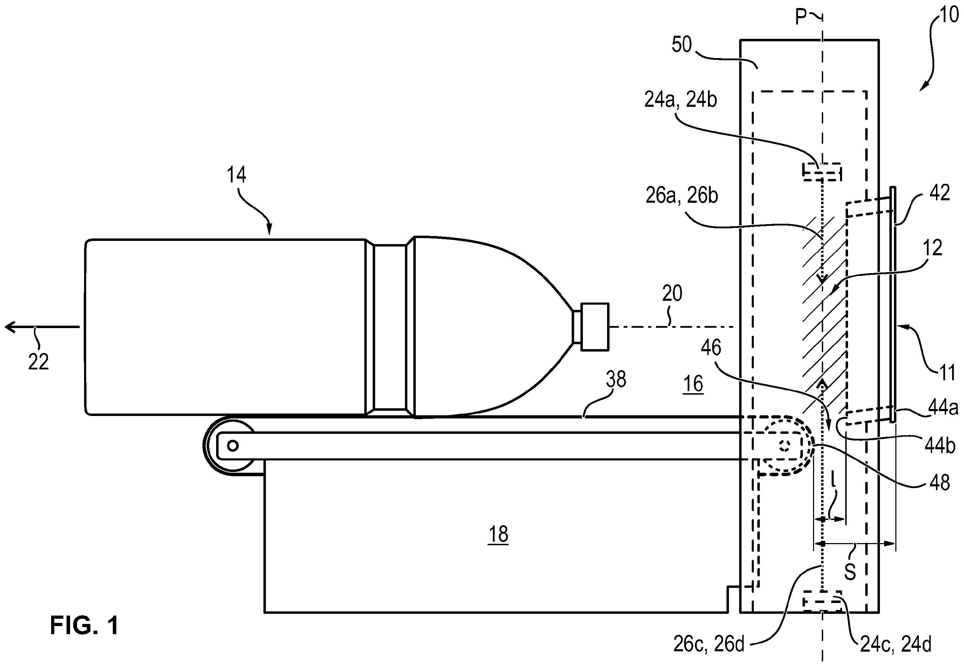

Figur 1 zeigt eine Seitenansicht eines Rücknahmeautomaten 10 mit einem Einführbereich 11, mit einer Transporteinheit 18 und mit einer Anordnung von Kameras 24a bis 24d. In Figur 1 sind eine Transportachse 20, eine Transportrichtung 22 und eine Erfassungsebene P senkrecht zur Transportrichtung 22 gezeigt. Die Transportachse 20 entspricht dem Zentrum des entlang der Transportachse 20 transportieren Objekts 14. Das Objekt 14 ist ein Gebinde, wie beispielsweise eine Flasche. Das Objekt 14 wird mit Hilfe der Transporteinheit 18 in einem Transportbereich 12 entlang der Transportachse 20 in die Transportrichtung 22 transportiert. Die Transportrichtung 22 ist eine Richtung, die von dem Einführbereich 11 parallel zur Transportachse 20 in das Innere 16 des Rücknahmeautomaten 10 zeigt. Der Einführbereich 11 wird von einem Einführtrichter 42 gebildet. Der Transportbereich 12 liegt in der Erfassungsebene P in Transportrichtung 22 unmittelbar hinter dem Einführtrichter 42. Die Anordnung von Kameras 24a bis 24d ist in einem Scannergehäuse 50 vorgesehen.

Wie in Figur 1 gezeigt, ist die Anordnung von Kameras 24a bis 24d senkrecht zur Transportrichtung 22 ausgerichtet. Die Kameras 24a bis 24d liegen in der Erfassungsebene P. Ferner ist ein erstes Paar von Kameras 24a, 24b oberhalb des Transportbereichs 12 angeordnet, während ein zweites Paar von Kameras 24c, 24d seitlich neben der Transporteinheit 18 angeordnet ist. Mit Hilfe der Kameras 24a, 24b des ersten Paares wird das Objekt 14 in der Erfassungsebene P aus zwei zugeordneten Erfassungsrichtungen 26a, 26b von oben erfasst. Ferner wird das Objekt 14 mit Hilfe der Kameras 24c, 24d des zweiten Paares in der Erfassungsebene P aus zwei zugeordneten Erfassungsrichtungen 26c, 26d von unten erfasst. Insbesondere ermöglicht die in dem Scannergehäuse 50 vorgesehene Anordnung von Kameras 24a bis 24d eine 360°-Erfassung des Objekts 14.

Im Betrieb wird das Objekt 14 über den Einführbereich 12 in das Innere 16 des Rücknahmeautomaten 10 eingeführt. Das Objekt 14 wird von einem Transportband 38 der Transporteinheit 18 in dem Transportbereich 12 aufgenommen und entlang der Transportachse 20 in die Transportrichtung 22 transportiert. Wenn sich das Objekt 14 in dem in der Erfassungsebene P liegenden Transportbereich 12 befindet, wird das Objekt 14 aus den Erfassungsrichtungen 26a bis 26d vollständig erfasst. Die Erfassung von Bildern des Objekts 14 dient zur Erkennung bestimmter Merkmale des Objekts 14, wie beispielsweise ein Barcode, ein Sicherheitsmerkmal, eine Form und/oder ein Etikett des Objekts 14.

Das Transportband 38 der Transporteinheit 18 ist relativ zu dem Einführtrichter 42 positionierbar. Insbesondere ist das Transportband 38 bis in den Bereich des Scannergehäuses 50 bewegbar. Wie in Figur 1 gezeigt, ist das Transportband 38 unmittelbar unterhalb des in der Erfassungsebene P liegenden Transportbereichs 12 angeordnet. Der Einführtrichter 42 erstreckt sich in Transportrichtung 22 von einer ersten Seite 44a, d. h. der Vorderseite des Einführtrichters 42, zu einer zweiten Seite 44b, d. h. der Rückseite des Einführtrichters 42. Ferner sind das Transportband 38 der Transporteinheit 18 und der Einführtrichter 42 derart beabstandet voneinander angeordnet, dass sich ein freier Spalt 46 zwischen der Rückseite 44b des Einführtrichters 42 und einer dieser Seite 44b zugwandten Seite 48, d. h. der Vorderseite, des Transportbandes 38 ergibt. Der freie Spalt 46 ermöglicht insbesondere die Erfassung des Objekts 14 aus den Erfassungsrichtungen 26c, 26d mit Hilfe der Kameras 24c, 24d.

Die Ausdehnung 1 des freien Spalts 46 parallel zur Transportrichtung 22 ist variabel einstellbar. Dies wird dadurch erreicht, dass das Transportband 38 der Transporteinheit 18 relativ zu dem Einführtrichter 42 beliebig positionierbar ist. Beispielsweise liegt die Ausdehnung 1 des freien Spalts 46 parallel zur Transportrichtung 22 zwischen 40mm und 60mm. Vorzugsweise liegt die Ausdehnung 1 des freien Spalts 46 zwischen 20mm und 30mm. Ferner ist der Abstand s zwischen der Vorderseite 44a des Einführtrichters 42 und der Vorderseite 48 des Transportbandes 38 kleiner als 100mm. Durch diese Dimensionierung ergibt sich eine vergleichsweise geringe Eingabetiefe für das Objekt 14, während gleichzeitig ein geeigneter Sichtspalt für die Kameras 24c, 24d des zweiten Paares bereitgestellt wird.

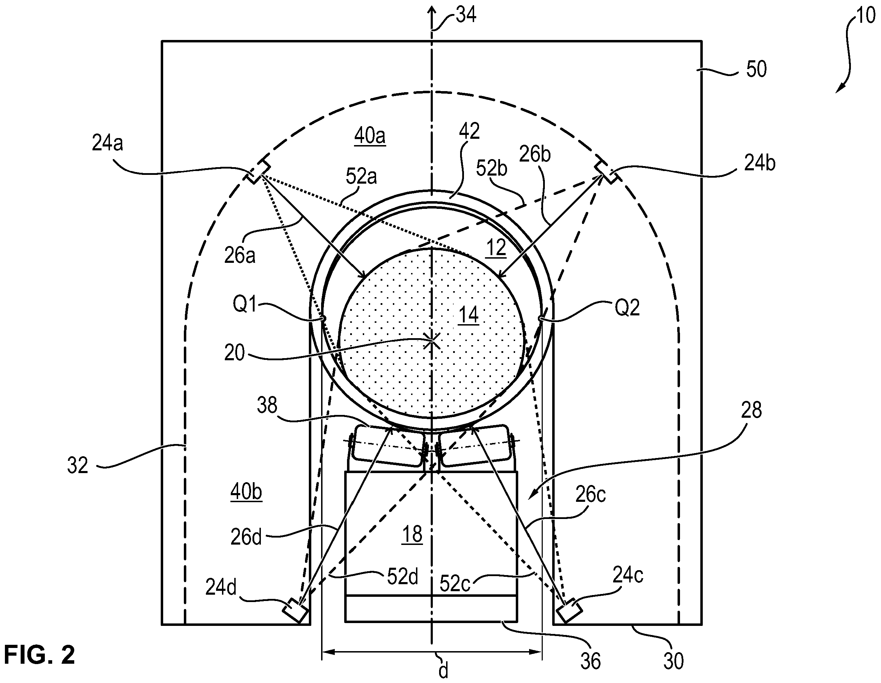

Figur 2 zeigt eine Vorderansicht des Rücknahmeautomaten 10 nach Figur 1 mit einer hufeisenförmigen Kameraanordnung 24a bis 24d. In Figur 2 ist der Transportbereich 12 gut sichtbar. Die Breite d des Transportbereichs 12 entspricht dem Durchmesser des inneren Umfangs des Einführtrichters 42. Die Höhe des Transportbereichs 12 entspricht zumindest der Höhe des Objekts 14 bzw. dem Durchmesser des inneren Umfangs des Einführtrichters 42.

Wie in Figur 2 gezeigt, umfasst die Kameraanordnung 24a bis 24d eine U-Form bzw. eine Hufeisenform 32. Ferner ist in Figur 2 gut sichtbar, dass die U-förmige bzw. hufeisenförmige Kameraanordnung 24a bis 24d einen kamerafreien Bereich 28, d. h. ein Bereich, in dem keine Kamera zur Erfassung des Objekts 14 angeordnet ist, umgibt. Der kamerafreie Bereich 28 grenzt an die Innenseite, d. h. die der Transportachse 20 zugewandten Seite, der Hufeisenform 32 an. Ferner erstreckt sich der kamerafreie Bereich 28 zumindest über die gesamte Breite d des Transportbereichs 12 bis zu einem unteren Ende 30 der Kameraanordnung 24a bis 24d, d. h., der kamerafreie Bereich 28 ist von einem unteren Ende des Transportbereichs 12 bis zu dem unteren Ende 30 der Kameraanordnung 24a bis 24d immer zumindest durch die Breite d gekennzeichnet. Insbesondere erstreckt sich der kamerafreie Bereich 28 von dem unteren Ende 30 der Kameraanordnung 24a bis 24d entlang der Längsachse 34 derselben senkrecht zur Transportachse 20 bis zu einem oberen Ende des Transportbereichs 12.

Der kamerafreie Bereich 28 umfasst den Transportbereich 12 und den Bereich senkrecht unterhalb des Transportbereichs 12. Der Bereich senkrecht unterhalb des Transportbereichs 12 entspricht zumindest dem Bereich, der durch das Lot der jeweiligen seitlichen Randpunkte Q1, Q2 des Durchmessers des inneren Umfangs des Einführtrichters 42 definiert ist. Durch das Vorsehen des kamerafreien Bereichs 28 wird es ermöglicht, dass das unmittelbar unterhalb des Transportbereichs 12 positionierte Transportband 38 bis in diesen kamerafreien Bereich 28 unterhalb des Transportbereichs 12 bewegbar ist. Wie anhand von Figur 1 beschrieben wurde, ist das Transportband 38 somit sehr nahe an den Einführtrichter 42 bis in das Scannergehäuse 50 bewegbar. Das untere Ende 30 der Kameraanordnung 24a bis 24d ist in etwa auf derselben Höhe wie das untere Ende 36 der Transporteinheit 18 angeordnet.

In Figur 2 sind das erste Paar von Kameras 24a, 24b und das zweite Paar von Kameras 24c, 24d gut sichtbar. Das erste Paar von Kameras 24a, 24b ist in einem den kamerafreien Bereich 28 umgebenden ersten Bereich 40a oberhalb des Transportbereichs 12 angeordnet. Ferner ist das zweite Paar von Kameras 24c, 24d in einem den kamerafreien Bereich 28 umgebenden zweiten Bereich 40b seitlich neben der Transporteinheit 18 angeordnet. Wie in Figur 2 gezeigt, sind die Kameras 24a, 24b des ersten Paares an der Außenseite, d. h. die der Transportachse 20 abgewandten Seite, der Hufeisenform 32 vorgesehen, während die Kameras 24c, 24d des zweiten Paares an der der Außenseite gegenüberliegenden Innenseite der Hufeisenform 32 vorgesehen sind. Ferner ist in Figur 2 gezeigt, dass die Kameras 24c, 24d des zweiten Paares einen Abstand haben, der größer als die seitliche Ausdehnung d des Transportbereichs 12, d. h. die Ausdehnung desselben senkrecht zur Längsachse 34 der Kameraanordnung 24a bis 24d, ist. Bei der in Figur 2 gezeigten Kameraanordnung 24a bis 24d sind die Kameras 24a, 24b des ersten Paares und die Kameras 24c, 24d des zweiten Paares jeweils symmetrisch zur Längsachse 34 der Kameraanordnung 24a bis 24d angeordnet.

Bezugnehmend auf Figur 1 und 2 sind die Kameras 24a bis 24d derart angeordnet, dass das Objekt 14 in der Erfassungsebene P senkrecht zur Transportrichtung 22 vollständig erfasst wird. Diese 360°-Detektion wird insbesondere durch ein Erfassen von Bildern des in einer einzigen Position befindlichen Objekts 14 erreicht. Dabei wird das Objekt 14 mit Hilfe der Kameras 24a bis 24d vollständig erfasst, ohne dass das Objekt 14 in verschiedene Stellungen gedreht wird.

Bezugnehmend auf Figur 2 ist die Kameraanordnung 24a bis 24d derart ausgebildet, dass das Objekt 14 aus den vier Erfassungsrichtungen 26a bis 26d, die den Kameras 24a bis 24d zugeordnet sind, erfasst wird. Dabei bilden die Erfassungsrichtungen 26a bis 26d jeweils zueinander einen Winkel größer als 90°. Ferner überschneiden sich die Gesichtsfelder 52a bis 52d der einzelnen Kameras 24a bis 24d derart, dass keine erfassungsfreien Bereiche auf der Oberfläche des Objekts 14 bleiben. Die den Kameras 24a bis 24d zugeordneten Erfassungsrichtungen 26a bis 26d zeigen jeweils von den Kameras 24a, 24b schräg von oben und von den Kameras 24c, 24d schräg von unten auf das Zentrum des Objekts 14 bzw. auf die Transportachse 20. Ferner haben die Erfassungsrichtungen 26a bis 26d jeweils einen Winkel von 90° relativ zur Transportrichtung 22. Somit wird das Objekt 14 in der Ebene P senkrecht zur Transportrichtung 22 erfasst.

Fremdstoffe, die von dem Objekt 14 her kommen, wie beispielsweise auslaufende Flüssigkeiten, können durch eine in den kamerafreien Bereich 28 senkrecht unterhalb des Transportbereichs 12 angeordnete Auffangvorrichtung aufgefangen werden. Die Auffangvorrichtung umfasst beispielsweise ein Behältnis, aus dem die aufgefangenen Fremdstoffe abgeleitet werden können.

Die vorliegende Erfindung schafft somit einen 360°-Scanner in Form eines Hufeisens 32 mit einem nach unten offenen bzw. kamerafreien Bereich 28. Wie in Figur 2 gezeigt, erfolgt die Blickrichtung der Kameras 24a bis 24d radial aus den Innenflächen des Hufeisens 32 heraus auf das Gebinde 14. Ein Vorteil dabei ist, dass sich direkt unter dem Gebinde 14 keine optische Fläche befindet, die verschmutzen kann. Ferner kann, wie in Figur 1 gezeigt, das Transportband 38 beliebig in die Öffnung des Scannergehäuses 50 hineingeschoben werden. Dadurch kann der freie Spalt 46 zwischen dem Transportband 38 und dem Einführtrichter 42, durch den die Kameras 24c, 24d des zweiten Paares radial auf das Gebinde 14 schauen, variabel in Größe und Position eingestellt werden. Auf diese Weise lässt sich das Transportband 38 relativ dicht an die Front des Rücknahmeautomaten 10 heranführen, wodurch die Eingrifftiefe für den Benutzer gegenüber dem Stand der Technik reduziert werden kann.

Die vorliegende Erfindung schafft insbesondere eine hufeisenförmige Kameraanordnung, deren Kameras 24a bis 24d so angeordnet sind, dass sie insgesamt von allen Seiten rundum auf das Gebinde 14 blicken können. Die erfindungsgemäße Anordnung und Aufteilung der Kamerasichtbereiche 52a bis 52d ermöglicht es, dass die Ansichten radial zur Transportrichtung 22 auf das Gebinde 14 in jedem Winkel innerhalb des 360°-Winkelbereichs weitgehend verzeichnungsfrei sind. Somit ist eine verbesserte Erkennung der nötigen Merkmale wie Barcode, Sicherheitsmerkmal, Form, Etikett, und sonstiger relevanter Merkmale möglich. Die Ansicht von unten wird durch den freien Spalt 46 zwischen dem Einführtrichter 42 und der Transporteinheit 18 gewährleistet.

Durch die nahezu senkrechte Blickrichtung auf das Gebinde 14 ist eine einfachere Erkennung durch den Verzicht auf rechenaufwändige Vorverarbeitungsschritte, wie beispielsweise durch affine Transformationen, aufgrund nicht oder nur gering vorhandener perspektivischer Verzerrungen möglich. Die daraus resultierende Verwendung einfacherer Algorithmen ermöglicht eine höhere Erkennungsgeschwindigkeit bzw. eine geringere Verarbeitungsdauer und führt zu einer höheren Leistung bei der Entgegennahme des Gebindes 14 durch das System 10.

Gemäß der vorliegenden Erfindung ist die Kameraanordnung 24a bis 24d im unteren Bereich offen gestaltet, und zwar so, dass keine nach innen liegenden waagrechten oder schrägen Flächen, Rundungen oder Kanten vorhanden sind. Somit kann das Risiko einer Verschmutzung durch tropfende oder auslaufende Restmengen an Flüssigkeit oder anderen Inhalten aus den teils offenen Gebinden bzw. anderweitige Verschmutzungen von der Außenseite der Gebinde, wie beispielsweise witterungs- und orts- bzw. umgebungsbedingte Verschmutzungen wie z. B. lose haftender Sand oder Regentropfen, unterbunden oder im Vergleich zu bekannten Lösungen zumindest deutlich minimiert werden. Die so erreichte verringerte Verschmutzungsanfälligkeit ermöglicht eine weniger aufwändige Reinigung des Systems bzw. eine längere mögliche Betriebszeit des Systems ohne Reinigung. Dabei tritt keine Minderung der Erkennungsleistung der Kameraanordnung ein. Es sind also längere Reinigungsintervalle möglich. Die unterhalb des Gebindes 14 anordnenbare Auffangvorrichtung kann die Flüssigkeiten und sonstigen Restbestände sowie Fremdpartikel, wie z. B. Sand oder sonstiger Schmutz auffangen, sammeln und ggf. ableiten.

Weitere Vorteile des erfindungsgemäßen Rücknahmeautomaten 10 liegen darin, dass das Transportband 38 variabel zum Einführtrichter 42 positioniert werden kann, da es in das Scannergehäuse 50 eintauchen kann. Der Sichtspalt 46 für die Kameras 24c, 24d zwischen der Transporteinheit 18 und dem Einführtrichter 42 ist dadurch variabel einstellbar. Wird die Transporteinheit 18 beispielsweise sehr nahe, vorzugsweise 20mm bis 30mm, an die Rückseite 44b des Einführtrichters 42 herangeführt, so kann die Entgegennahme und Weiterführung bzw. Abweisung und Rücktransport des Gebindes 14 sehr frühzeitig realisiert werden. Durch das geringe Spaltmaß kann auch unterbunden werden, dass Gebinde mit geringen Abmaßen, wie beispielsweise kurze oder stark verformte Dosen oder Flaschen, im Bereich zwischen der Eingabe und dem Transportband 38 zwischen denselben hindurchfallen, liegen bleiben oder verklemmen. Ferner ergibt sich daraus eine geringere Möglichkeit zur Verschmutzung darunter befindliche Bereiche. Die damit verbundene deutlich kürzere Eingabetiefe für Gebinde von der Vorderkante 44a der Eingabeöffnung bis zum Beginn 48 der Transporteinheit 18 von insgesamt kleiner als 100mm bietet dem Bediener im Gegensatz zum Stand der Technik (Eingabetiefe von etwa 160mm) weiterhin die folgenden Vorteile. Der Bediener hat ein angenehmeres Gefühl, da er seine Hand nicht weiter in die Gebindeöffnung hineingeben muss. Es ergibt sich eine bessere Ergonomie bei der Abgabe, da die notwendige Armbewegung des Bedieners kürzer ausfallen kann. Ferner ergibt sich ein schnelleres, taktiles Gefühl bei der Entgegennahme des Gebindes. Es ergibt sich eine schnellere Abweisung des Gebindes, insbesondere durch den Rücktransport des Gebindes, bei der Erkennung auf Ungültigkeit des Gebindes. Dies erfolgt im Idealfall noch während der Kunde das Gebinde in der Hand hält, wodurch auch hier das taktile Gefühl begünstigt und das Verständnis des Kunden auf die ungültige Eingabe befördert und beschleunigt wird. Insbesondere ergibt sich eine geringere Systemtiefe, d. h. ein geringerer "Footprint" des Systems.

Zusammenfassend ergeben sich die folgenden Vorteile. Verschmutzungen können problemlos nach unten tropfen und verschmutzen dabei nicht die optisch wirksamen Flächen der Kameraanordnung 24a bis 24d. Ein Verkratzen der optisch wirksamen Flächen der Kameraanordnung 24a bis 24d ist nicht möglich, da Gebinde darauf nicht abgelegt werden können. Die Transporteinheit 18 und der Einführtrichter 42 können in den Bereich des Scannergehäuses 50 variabel eintauchen bei gleichzeitiger Wahrung der optisch wirksamen und notwendigen Kamerasichtfläche. Dadurch ergibt sich eine Reduzierung der Eingabetiefe sowie der gesamten Systemtiefe. Im Gegensatz zu bekannten Lösungen schaut die Kameraanordnung 24a bis 24d unter einem Winkel von 90° relativ zur Transportachse 20 auf das Gebinde 14. Das Transportband 38 muss daher nicht hinter dem Scannergehäuse 50 platziert werden.

### Bezugszeichenliste

- 10: Rücknahmeautomat
- 11: Einführbereich
- 12: Transportbereich
- 14: Objekt
- 16: Inneres des Rücknahmeautomaten
- 18: Transporteinheit
- 20: Transportachse
- 22: Transportrichtung
- 24a, 24b, 24c, 24d: Kameras
- 28: kamerafreier Bereich
- 30: unteres Ende der Kameraanordnung
- 32: U-Form
- 34: Längsachse der Kameraanordnung
- 36: unteres Ende der Transporteinheit
- 38: Transportband
- 40a, 40b: Bereich der Kameraanordnung
- 42: Einführtrichter
- 44a, 44b: Seite des Einführtrichters
- 46: freier Spalt
- 48: Seite der Transporteinheit
- 50: Scannergehäuse
- 52a bis 52d: Gesichtsfeld
- Q1, Q2: seitlicher Randpunkt des Transportbereichs

## Patentansprüche

1. Rücknahmeautomat (10),
mit einem Einführbereich (11) zum Einführen eines Objekts (14) in das Innere (16) des Rücknahmeautomaten (10),
mit einer Transporteinheit (18) zum Transportieren des Objekts (14) in einem Transportbereich (12) entlang einer Transportachse (20), und
mit einer Anordnung von Kameras (24a bis 24d) in einer Erfassungsebene (P) zum Erfassen von Bildern des Objekts (14) aus mehreren Erfassungsrichtungen (26a bis 26d), wobei die Bilderfassungsrichtung jeder Kamera (24a bis 24d) zum Transportbereich (12) hin gerichtet ist,
**dadurch gekennzeichnet, dass** der Rücknahmeautomat (10) einen oberhalb der Transporteinheit (18) angeordneten Einführtrichter (42) mit dem Einführbereich (11) aufweist, wobei sich der Einführtrichter (42) in einer Transportrichtung (22) von einer ersten Seite (44a) zu einer zweiten Seite (44b) erstreckt, wobei die Transporteinheit (18) und der Einführtrichter (42) beabstandet voneinander angeordnet sind, so dass sich ein freier Spalt (46) zwischen der zweiten Seite (44b) des Einführtrichters (42) und einer dieser Seite (44b) zugewandten Seite (48) der Transporteinheit (18) ergibt,
dass die Ausdehnung (l) des freien Spalts (46) parallel zur Transportachse (20) zwischen 20 mm und 30 mm liegt,
dass die Erfassungsebene (P) in Transportrichtung (22) unmittelbar hinter dem Einführtrichter (42) liegt,
dass der Rücknahmeautomat (10) einen kamerafreien Bereich hat, wobei der kamerafreie Bereich den Transportbereich (12) und den Bereich senkrecht unterhalb des Transportbereichs (12) umfasst, wobei die Kameras (24a bis 24d) außerhalb des kamerafreien Bereichs angeordnet sind und wobei in dem kamerafreien Bereich keine Kamera zur Erfassung des Objekts (14) angeordnet ist,
dass die Kameras (24a bis 24d) derart angeordnet sind, dass das Objekt (14) in der Erfassungsebene (P) senkrecht zur Transportachse (20) vollständig erfasst wird,
dass die Anordnung von Kameras (24a bis 24d) zumindest ein erstes Paar von Kameras (24a, 24b) und ein zweites Paar von Kameras (24c, 24d) umfasst, wobei das erste Paar von Kameras (24a, 24b) in einem an den Transportbereich (12) angrenzenden ersten Bereich (40a) oberhalb des Transportbereichs (12) und das zweite Paar von Kameras (24c, 24d) in einem an den Bereich senkrecht unterhalb des Transportbereichs (12) angrenzenden zweiten Bereich (40b) seitlich neben der Transporteinheit (18) angeordnet sind, und
dass die Kameras (24c, 24d) des zweiten Paares einen Abstand haben, der größer als die seitliche Ausdehnung (d) des Transportbereichs (12) ist.

2. Rücknahmeautomat (10) nach Anspruch 1, **dadurch gekennzeichnet, dass** zumindest ein Teil der Transporteinheit (18) bis in den Bereich senkrecht unterhalb des Transportbereichs (12) bewegbar ist.

3. Rücknahmeautomat (10) nach Anspruch 1 oder 2, **dadurch gekennzeichnet, dass** die Anordnung von Kameras (24a bis 24d) eine U-Form (32) umfasst, und dass der Transportbereich (12) und der Bereich senkrecht unterhalb des Transportbereichs (12) von der U-förmigen Anordnung von Kameras (24a bis 24d) umgeben ist.

4. Rücknahmeautomat (10) nach einem der Ansprüche 1 bis 3, **dadurch gekennzeichnet, dass** sich der Transportbereich (12) und der Bereich senkrecht unterhalb des Transportbereichs (12) entlang der Längsachse (34) der Anordnung von Kameras (24a bis 24d) senkrecht zur Transportachse (20) erstrecken.

5. Rücknahmeautomat (10) nach einem der Ansprüche 1 bis 4, **dadurch gekennzeichnet, dass** das untere Ende (30) der Anordnung von Kameras (24a bis 24d) auf derselben Höhe wie das untere Ende (36) der Transporteinheit (18) angeordnet ist.

6. Rücknahmeautomat (10) nach einem der Ansprüche 1 bis 5, **dadurch gekennzeichnet, dass** die Transporteinheit (18) ein Transportband (38) umfasst, das unmittelbar unterhalb des Transportbereichs (12) positionierbar ist.

7. Rücknahmeautomat (10) nach einem der Ansprüche 1 bis 6, **dadurch gekennzeichnet, dass** die Kameras (24a bis 24d) derart angeordnet sind, dass das Objekt (14) aus mindestens vier Erfassungsrichtungen (26a bis 26d) erfasst wird, und dass die Erfassungsrichtungen (26a bis 26d) jeweils zueinander einen Winkel größer als 90° bilden.

8. Rücknahmeautomat (10) nach einem der Ansprüche 1 bis 7, **dadurch gekennzeichnet, dass** die Kameras (24a bis 24d) derart angeordnet sind, dass das Objekt (14) aus mehreren Erfassungsrichtungen (26a bis 26d), die jeweils einen Winkel von 90° relativ zur Transportachse (20) haben, erfasst wird.

9. Rücknahmeautomat (10) nach einem der Ansprüche 1 bis 8, **dadurch gekennzeichnet, dass** die Ausdehnung (l) des freien Spalts (46) parallel zur Transportachse (20) variabel einstellbar ist.

10. Rücknahmeautomat (10) nach einem der Ansprüche 1 bis 9, **dadurch gekennzeichnet, dass** der Abstand (s) zwischen der ersten Seite (44a) des Einführtrichters (42) und der Transporteinheit (18) kleiner als 100 mm ist.

11. Rücknahmeautomat (10) nach einem der Ansprüche 1 bis 10, **gekennzeichnet durch** eine in dem Bereich senkrecht unterhalb des Transportbereichs (12) angeordnete Vorrichtung zum Auffangen von von dem Objekt (14) herkommenden Fremdstoffen.

## Claims

1. Reverse vending machine (10),
having an insertion region (11) for inserting an object (14) into the inside (16) of the reverse vending machine (10),
having a transport unit (18) for transporting the object (14) in a transport region (12) along a transport axis (20), and
having an arrangement of cameras (24a to 24d) in a capture plane (P) for capturing images of the object (14) from multiple capture directions (26a to 26d), wherein the image capture direction of each camera (24a to 24d) is directed towards the transport region (12), **characterized in that** the reverse vending machine (10) has an insertion funnel (42), arranged above the transport unit (18), with the insertion region (11), wherein the insertion funnel (42) extends from a first side (44a) to a second side (44b) in a direction of transport (22), wherein the transport unit (18) and the insertion funnel (42) are arranged at an interval from one another, so that a clear gap (46) is produced between the second side (44b) of the insertion funnel (42) and a side (48) of the transport unit (18) that faces this side (44b),
**in that** the extent (1) of the clear gap (46) parallel to the transport axis (20) is between 20 mm and 30 mm, **in that** the capture plane (P) lies directly behind the insertion funnel (42) in the direction of transport (22),
**in that** the reverse vending machine (10) has a camera-free region, wherein the camera-free region comprises the transport region (12) and the region perpendicularly beneath the transport region (12), wherein the cameras (24a to 24d) are arranged outside the camera-free region and wherein there is no camera arranged in the camera-free region for capturing the object (14),
**in that** the cameras (24a to 24d) are arranged such that the object (14) is fully captured perpendicularly to the transport axis (20) in the capture plane (P),
**in that** the arrangement of cameras (24a to 24d) comprises at least a first pair of cameras (24a, 24b) and a second pair of cameras (24c, 24d), wherein the first pair of cameras (24a, 24b) is arranged in a first region (40a), adjoining the transport region (12), above the transport region (12) and the second pair of cameras (24c, 24d) is arranged in a second region (40b), adjoining the region perpendicularly beneath the transport region (12), laterally beside the transport unit (18), and
**in that** the cameras (24c, 24d) of the second pair are at an interval that is greater than the lateral extent (d) of the transport region (12).

2. Reverse vending machine (10) according to Claim 1, **characterized in that** at least part of the transport unit (18) is movable into the region perpendicularly beneath the transport region (12).

3. Reverse vending machine (10) according to Claim 1 or 2, **characterized in that** the arrangement of cameras (24a to 24d) comprises a U shape (32), and **in that** the transport region (12) and the region perpendicularly beneath the transport region (12) are surrounded by the U-shaped arrangement of cameras (24a to 24d).

4. Reverse vending machine (10) according to one of Claims 1 to 3, **characterized in that** the transport region (12) and the region perpendicularly beneath the transport region (12) extend along the longitudinal axis (34) of the arrangement of cameras (24a to 24d) at right angles to the transport axis (20).

5. Reverse vending machine (10) according to one of Claims 1 to 4, **characterized in that** the lower end (30) of the arrangement of cameras (24a to 24d) is arranged at the same level as the lower end (36) of the transport unit (18).

6. Reverse vending machine (10) according to one of Claims 1 to 5, **characterized in that** the transport unit (18) comprises a conveyor belt (38) that is positionable directly beneath the transport region (12) .

7. Reverse vending machine (10) according to one of Claims 1 to 6, **characterized in that** the cameras (24a to 24d) are arranged such that the object (14) is captured from at least four capture directions (26a to 26d), and **in that** the capture directions (26a to 26d) each form an angle of greater than 90° in relation to one another.

8. Reverse vending machine (10) according to one of Claims 1 to 7, **characterized in that** the cameras (24a to 24d) are arranged such that the object (14) is captured from multiple capture directions (26a to 26d) that are each at an angle of 90° relative to the transport axis (20).

9. Reverse vending machine (10) according to one of Claims 1 to 8, **characterized in that** the extent (1) of the clear gap (46) parallel to the transport axis (20) is variably adjustable.

10. Reverse vending machine (10) according to one of Claims 1 to 9, **characterized in that** the interval (s) between the first side (44a) of the insertion funnel (42) and the transport unit (18) is less than 100 mm.

11. Reverse vending machine (10) according to one of Claims 1 to 10, **characterized by** an apparatus for collecting foreign substances coming from the object (14), which apparatus is arranged in the region perpendicularly beneath the transport region (12).

## Revendications

1. Récupérateur automatique (10),
comprenant une zone d'introduction (11) destinée à introduire un objet (14) à l'intérieur (16) du récupérateur automatique (10),
comprenant une unité de transport (18) destinée à transporter l'objet (14) dans une la zone de transport (12) le long d'un axe de transport (20) et
comprenant un arrangement de caméras (24a à 24d) dans un plan de capture (P) destinées à capturer des images de l'objet (14) depuis plusieurs directions de capture (26a à 26d), la direction de capture d'image de chaque caméra (24a à 24d) étant orientée vers la zone de transport (12), **caractérisé en ce que** le récupérateur automatique (10) possède un entonnoir d'introduction (42) muni d'une zone d'introduction (11) disposé au-dessus de l'unité de transport (18), l'entonnoir d'introduction (42) s'étendant dans une direction de transport (22) d'un premier côté (44a) à un deuxième côté (44b), l'unité de transport (18) et l'entonnoir d'introduction (42) étant disposés espacés l'un de l'autre, de sorte qu'il se produit un espacement dégagé (46) entre le deuxième côté (44b) de l'entonnoir d'introduction (42) et un côté (48) de l'unité de transport (18) qui fait face à ce côté (44b),
**en ce que** l'étendue (1) de l'espacement dégagé (46) parallèlement à l'axe de transport (20) est comprise entre 20 mm et 30 mm,
**en ce que** le plan de capture (P) se trouve immédiatement derrière l'entonnoir d'introduction (42) dans la direction de transport (22),
**en ce que** le récupérateur automatique (10) comprend une zone exempte de caméra, la zone exempte de caméra englobant la zone de transport (12) et la zone verticalement au-dessous de la zone de transport (12), les caméras (24a à 24d) étant disposées en-dehors de la zone exempte de caméra et aucune caméra destinée à capturer l'objet (14) n'étant disposée dans la zone exempte de caméra,
**en ce que** les caméras (24a à 24d) sont disposées de telle sorte que l'objet (14) est entièrement capturé dans le plan de capture (P) perpendiculairement à l'axe de transport (20),
**en ce que** l'arrangement de caméras (24a à 24d) comporte au moins une première paire de caméras (24a, 24b) et une deuxième paire de caméras (24c, 24d), la première paire de caméras (24a, 24b) étant disposée dans une première zone (40a) adjacente de la zone de transport (12) au-dessus de la zone de transport (12) et la deuxième paire de caméras (24c, 24d) dans une deuxième zone (40b) adjacente de la zone verticalement au-dessous de la zone de transport (12), latéralement à côté de l'unité de transport (18), et
**en ce que** les caméras (24c, 24d) de la deuxième paire présentent un écart qui est supérieur à l'étendue latérale (d) de la zone de transport (12).

2. Récupérateur automatique (10) selon la revendication 1, **caractérisé en ce qu'**au moins une partie de l'unité de transport (18) peut être déplacée jusque dans la zone verticalement au-dessous de la zone de transport (12).

3. Récupérateur automatique (10) selon la revendication 1 ou 2, **caractérisé en ce que** l'arrangement de caméras (24a à 24d) comporte une forme de U (32) et **en ce que** la zone de transport (12) et la zone verticalement au-dessous de la zone de transport (12) sont entourées par l'arrangement de caméras (24a à 24d) en forme de U.

4. Récupérateur automatique (10) selon l'une des revendications 1 à 3, **caractérisé en ce que** la zone de transport (12) et la zone verticalement au-dessous de la zone de transport (12) s'étendent le long de l'axe longitudinal (34) de l'arrangement de caméras (24a à 24d) perpendiculairement à l'axe de transport (20).

5. Récupérateur automatique (10) selon l'une des revendications 1 à 4, **caractérisé en ce que** l'extrémité inférieure (30) de l'arrangement de caméras (24a à 24d) est disposée à la même hauteur que l'extrémité inférieure (36) de l'unité de transport (18).

6. Récupérateur automatique (10) selon l'une des revendications 1 à 5, **caractérisé en ce que** l'unité de transport (18) comporte une bande transporteuse (38) qui peut être positionnée directement au-dessous de la zone de transport (12).

7. Récupérateur automatique (10) selon l'une des revendications 1 à 6, **caractérisé en ce que** les caméras (24a à 24d) sont disposées de telle sorte que l'objet (14) est capturé depuis au moins quatre directions de capture (26a à 26d), et **en ce que** les directions de capture (26a à 26d) forment respectivement un angle supérieur à 90° entre elles.

8. Récupérateur automatique (10) selon l'une des revendications 1 à 7, **caractérisé en ce que** les caméras (24a à 24d) sont disposées de telle sorte que l'objet (14) est capturé depuis plusieurs directions de capture (26a à 26d) qui présentent respectivement un angle supérieur à 90° par rapport à l'axe de transport (20).

9. Récupérateur automatique (10) selon l'une des revendications 1 à 8, **caractérisé en ce que** l'étendue (1) de l'espacement dégagé (46) parallèle à l'axe de transport (20) est réglable de manière variable.

10. Récupérateur automatique (10) selon l'une des revendications 1 à 9, **caractérisé en ce que** l'écart (s) entre le premier côté (44a) de l'entonnoir d'introduction (42) et l'unité de transport (18) est inférieur à 100 mm.

11. Récupérateur automatique (10) selon l'une des revendications 1 à 10, **caractérisé par** un dispositif disposé dans la zone verticalement au-dessous de la zone de transport (12) servant à collecter les corps étrangers en provenance de l'objet (14).
